# EUROPEAN PATENT APPLICATION

(11) **EP 4 528 549 A1**
(43) Date of publication of application: **26.03.2025**
(21) Application number: 23910070.4
(22) Date of filing: 11.12.2023
(51) Int. Cl.: G06F 16/9535, G06F 16/735

(54) **TOPIC PUSHING PROCESSING METHOD AND APPARATUS, AND DEVICE AND MEDIUM**

(30) Priority: 29.12.2022 CN 202211707037
(71) Applicant: BEIJING YOUZHUJU NETWORK TECHNOLOGY CO. LTD., Beijing 101299 (CN)
(72) Inventor: CHENG, Yang, Beijing 100028 (CN)
(74) Representative: Isarpatent
(86) International application number: PCT/CN2023/137871
(87) International publication number: WO 2024/140140

(57) **Abstract**

Embodiments of the present disclosure relate to a topic pushing processing method and apparatus, and a device and a medium. The method comprises: in response to obtaining a topic pushing request sent by a client, determining, from a current push topic pool, a plurality of reference push topics matching client feature information; according to a ranking score corresponding to each reference push topic, determining at least one target push topic from the plurality of reference push topics, and sending the at least one target push topic to the client corresponding to the topic pushing request, so that the client corresponding to the topic pushing request is controlled to display a push page of the clicked target push topic pre-constructed with a link, wherein the push page comprises associated push information of the clicked target push topic. **In** this way, a success rate of pushing topics is enhanced, and the topic pushing request effect is improved in a way that the push topic is linked to the push page which comprises corresponding associated push information.

## Description

### CROSS REFERENCE TO RELATED APPLICATIONS

The present application claims a priority right to the Chinese patent application No. 202211707037.9 entitled "Topic pushing processing method and apparatus, and device and medium" filed with the Chinese Patent Office on December 29, 2022, the entire disclosure of which is hereby incorporated by reference in its entirety.

### FIELD

The present disclosure relates to the technical field of application of computers, and particularly to a topic pushing processing method and apparatus, and a device and a medium.

### BACKGROUND

With the development of computer technologies, topic pushing has become a common service manner to provide better online service. For example, pushing hot consumption topics on an online shopping platform may help consumers to buy appropriate goods and avoid unintended browsing of goods.

In the relevant art, a topic is manually set by a relevant operator; the operator sets a corresponding topic according to a subjective judgement of a current consumption hot spot; when the corresponding topic is clicked, preset push information corresponding to the clicked topic is displayed. However, such a topic determining manner causes the correctness rate and success rate of pushing the topic not high.

### SUMMARY

Embodiments of the present disclosure provide a topic pushing processing method, comprising: in response to obtaining a topic pushing request sent by a client, obtaining client feature information corresponding to the client, and determining, from a current push topic pool, a plurality of reference push topics matching the client feature information; obtaining a ranking score corresponding to each reference push topic based on at least one ranking factor corresponding to each reference push topic; determining at least one target push topic currently to be pushed, from the plurality of reference push topics based on the ranking score, and sending the at least one target push topic to the client corresponding to the topic pushing request, to control, in response to detecting a click instruction for the at least one target push topic, the client corresponding to the topic pushing request to display a push page with a pre-established link to the clicked target push topic, where the push page comprises associated push information of the clicked target push topic.

Embodiments of the present disclosure further provide a topic pushing processing apparatus, comprising: a first obtaining module configured to, in response to obtaining a topic pushing request sent by a client, obtain client feature information corresponding to the client; a determination module configured to determine, from a current push topic pool, a plurality of reference push topics matching the client feature information; a second obtaining module configured to obtain a ranking score corresponding to each reference push topic based on at least one ranking factor corresponding to each reference push topic; a sending module configured to determine at least one target push topic currently to be pushed, from the plurality of reference push topics based on the ranking score, and send the at least one target push topic to the client corresponding to the topic pushing request, to control, in response to detecting a click instruction for the at least one target push topic, the client corresponding to the topic pushing request to display a push page with a pre-established link to the clicked target push topic, where the push page comprises associated push information of the clicked target push topic.

Embodiments of the present disclosure further provide an electronic device comprising: a processor; a memory configured to store instructions executable by the processor; the processor is configured to read the executable instructions from the memory and execute the instructions to implement the topic pushing processing method according to embodiments of the present disclosure.

Embodiments of the present disclosure further provide a computer-readable storage medium having a computer program stored thereon, the computer program being configured to perform the topic pushing processing method according to embodiments of the present disclosure.

### BRIEF DESCRIPTION OF THE DRAWINGS

The above and other features, advantages and aspects of the embodiments of the present disclosure will be more apparent in conjunction with the drawings and with reference to the following embodiments. The same or similar reference numerals throughout the drawings represent the same or like elements. It should be understood that the drawings are schematic and the components and elements are not necessarily drawn to scale.
FIG. 1 illustrates a flow chart of a topic pushing processing method according to embodiments of the present disclosure;
FIG. 2 illustrates a schematic diagram of a topic pushing processing scenario according to embodiments of the present disclosure;
FIG. 3 illustrates a schematic diagram of another topic pushing processing scenario according to embodiments of the present disclosure;
FIG. 4 illustrates a schematic diagram of a topic pushing processing architecture according to embodiments of the present disclosure;
FIG. 5 illustrates a schematic diagram of a further topic pushing processing scenario according to embodiments of the present disclosure;
FIG. 6 illustrates a schematic diagram of a further topic pushing processing scenario according to embodiments of the present disclosure;
FIG. 7 illustrates a schematic diagram of a further topic pushing processing scenario according to embodiments of the present disclosure;
FIG. 8 illustrates a schematic diagram of a further topic pushing processing scenario according to embodiments of the present disclosure;
FIG. 9 illustrates a structural schematic diagram of a topic pushing processing apparatus according to embodiments of the present disclosure;
FIG. 10 is a structural schematic diagram of an electronic device according to embodiments of the present disclosure.

### DETAILED DESCRIPTION OF EMBODIMENTS

Embodiments of the present disclosure will be described in detail below with reference to the accompanying drawings. Although the drawings show some embodiments of the present disclosure, it should be understood that the present disclosure can be implemented in various forms and should not be construed as being limited to the embodiments described herein. Instead, the embodiments are provided for a more thorough and complete understanding of the present disclosure. It should be appreciated that the drawings and the embodiments in the present disclosure are for illustrative purpose only, and are not intended to limit the protection scope of the present disclosure.

It should be appreciated that the steps of the method according to the embodiments of the present disclosure may be performed in different orders, and/or be performed in parallel. In addition, the method embodiments may include additional steps and/or the performance of illustrated steps may be omitted. The scope of the present disclosure is not limited in this regard.

The term "including" and variants thereof as used herein are open-ended comprises, that is, "including but not limited to". The term "based on" means "based at least in part on." The term "an embodiment" means "at least one embodiment", the term "another embodiment" means "at least one another embodiment", and the term "some embodiments" means "at least some embodiments". Definitions of other terms are provided in the following description.

It should be noted that the concepts such as "first" and "second" mentioned in the present disclosure are used to distinguish different apparatus, modules or units, and are not used to limit a sequential order or interdependence of the functions performed by the apparatus, modules or units.

It should be noted that, the modifiers such as "one" and "a plurality of" mentioned in the present disclosure are schematic rather than restrictive, and should be understood as "one or more" by those skilled in the art, otherwise explicitly illustrated in the context.

The names of messages or information exchanged between a plurality of apparatuses in the embodiments of the present disclosure are only for illustrative purposes, and are not intended to limit the scope of the messages or information.

In order to solve the above technical problems or at least partially solve the above technical problems, the present disclosure provides a topic pushing processing method and apparatus, and a device and a medium, which enhance a success rate of topic pushing, and improve the topic pushing request effect in a way that the push topic is linked to a push page which comprises corresponding associated push information.

The technical solutions provided by the embodiments of the present disclosure have the following advantages as compared with the prior art:
The topic pushing processing solution provided by embodiments of the present disclosure comprises: in response to obtaining a topic pushing request sent by a client, obtaining client feature information corresponding to the client, and determining, from a current push topic pool, a plurality of reference push topics matching the client feature information; obtaining a ranking score corresponding to each reference push topic based on at least one ranking factor corresponding to each reference push topic; determining at least one target push topic currently to be pushed, from the plurality of reference push topics based on the ranking score, and sending the at least one target push topic to the client corresponding to the topic pushing request, so that when a click instruction for the at least one target push topic is detected, the client corresponding to the topic pushing request is controlled to display a push page of the clicked target push topic pre-constructed with a link, where the push page comprises associated push information of the clicked target push topic. In this way, a success rate of pushing topics is enhanced, and the topic pushing request effect is improved in a way that the push topic is linked to the push page which comprises corresponding associated push information.

In order to solve the above problems, the embodiments of the present disclosure provide a topic pushing processing method, which will be introduced below in conjunction with specific embodiments.

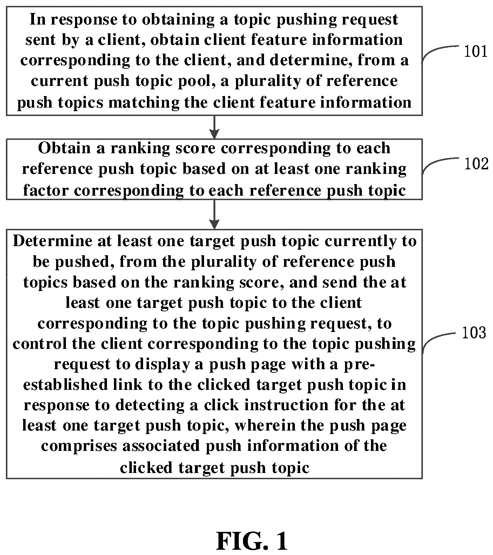

FIG. 1 illustrates a flow chart of a topic pushing processing method according to embodiments of the present disclosure. The method may be performed by a topic pushing processing apparatus, where the apparatus may be implemented with software and/or hardware, and generally integrated in an electronic device. As shown in FIG. 1, the method comprises:
Step 101: in response to obtaining a topic pushing request sent by a client, obtain client feature information corresponding to the client, and determining, from a current push topic pool, a plurality of reference push topics matching the client feature information.

The client feature information comprises, but is not limited to, an industry type of the topics of interest, etc. The topic industry type may be "food industry type", "cosmetics industry type", "jewelry industry type", etc.

It needs to be appreciated that the manners of responding to obtaining a topic pushing request sent by a client vary with different application scenarios, which is illustrated as follows:
In some alternative embodiments, if the topic pushing is performed on the client periodically, an online duration of the client's topic push page is detected; when the online duration reaches a topic push period duration, a topic pushing request sent by the client is obtained.

For example, if the period duration is 10 minutes, a topic pushing request sent by the corresponding client is obtained every 10 minutes, thereby ensuring the real-time performance of subsequently pushed topics.

In some alternative embodiments, the topic pushing request sent by the client is obtained upon detecting that a preset topic update operation is performed at the client. In the present embodiment, the preset topic update operation may be performed by triggering a corresponding update control, or may be triggered by inputting a speech information containing a preset update keyword, etc.

It may be appreciated that each push topic in the current push topic pool has a topic popularity value, and that the higher the topic popularity value is, the higher the popularity the corresponding push topic is. The topic popularity value of the corresponding topic is updated by a Click Through Rate (CTR) of the topic on the client.

The current push topic pool is a real-time topic library maintained. The real-time topic library is updated in real time. The current push topic pool may contain hot topics such as hot live stream topics, hot industry topics, hot goods topics and hot search topics in corresponding push scenarios. For example, when the current push topic pool comprises hot live stream topics, a video with a play amount greater than a preset play amount is obtained, and a video keyword corresponding to the video is obtained as a push topic, etc. Each push topic has a topic popularity value.

For example, when the current push topic pool comprises search topics determined according to search terms, after a search term is obtained, the search terms obtained in the current analysis period are analyzed according to a preset analysis frequency, a popular search term is determined based on the search frequency of the search term, and the popular search term is taken as the push topic. Alternatively, a knowledge graph corresponding to a search scenario can be queried according to the popular search term, where the knowledge graph comprises a plurality of nodes, each node comprises a corresponding search term, and nodes in an association relationship are connected via edges. Therefore, after the popular search term is determined, the knowledge graph corresponding to the search scenario is queried to obtain an associated search term, and the associated search term and the popular search term are taken as search topics.

The current topic library may also comprise topics which are set according to scenario demands, for example, recommended topics set by relevant operating personnel according to scenario demands.

In one embodiment of the present disclosure, before topics are added into the push topic pool, the topics need to be checked, for example, some new topics which are repetitious with the already-existing topics are filtered, and some topics containing a preset character are removed, where the preset topic may be set according to scenario demands, for example, the preset character may be a scrambling character. The check of the topics may be an automatic check or an online check, etc.

In one embodiment of the present disclosure, the topic popularity values in the current push topic pool are maintained in real time. In one embodiment of the present disclosure, the topic popularity values of the corresponding topics are updated based on the CTR.

In embodiments of the present disclosure, after at least one target push topic is pushed to a corresponding client, a current total push times and a current total click times of a first push topic are determined in response to receiving a click instruction for the first push topic in the at least one target push topic in the client, where the current total push times of the first push topic is obtained by adding one to a historical total push times before the target push topic is pushed to the corresponding client; according to calculation logic of the CTR, a ratio of the current total click times to the current total push times for the first push topic is calculated as the topic popularity value of the first push topic.

In the present embodiment, a second push topic not clicked in the at least one target push topic is determined. Although the second push topic is pushed to the client, the second push topic is not clicked at the corresponding client. Therefore, in order to maintain topic popularity in real time, a current total push times and a historical total click times of the second push topic are determined, where the current total push times of the second push topic is obtained by adding one to the historical total push times before the second push topic is pushed to the corresponding client. According to the calculation logic of the CTR, a ratio of the historical total click times to the current total push times for the second push topic is calculated as the topic popularity value of the second push topic.

It needs to be emphasized that as for the topic popularity values of relevant push topics in the current push topic pool, the topic popularity values of the corresponding push topics are updated according to click instructions pushed to all clients corresponding to all topic pushing requests, thereby ensuring real-time maintenance of the topic popularity values of the push topics.

Thus, in the current push topic pool of the embodiments of the present disclosure, on the one hand, the included push topics may be updated in real time according to the current search term hot spots, industry hot spots, etc.; on the other hand, the real-time popularity values of the push topics are maintained according to the clicking operations at the clients corresponding to the topic pushing requests, to ensure the consistency of the push topics in the current push topic pool and the topic popularity of the push topics with hot trends such as industry hot spots in actual scenarios.

In one embodiment of the present disclosure, it may be appreciated that a matching client feature information label is pre-created for each push topic. The matching client feature information label may be obtained by summarizing and learning after clicking the client feature information of the corresponding topic. A plurality of reference push topics matching the client feature information may be determined from the current push topic pool according to the client feature information label.

Step 102: obtain a ranking score corresponding to each reference push topic based on at least one ranking factor corresponding to each reference push topic.

Step 103: determine at least one target push topic currently to be pushed, from the plurality of reference push topics based on the ranking score, and send the at least one target push topic to the client corresponding to the topic pushing request, to control, in response to detecting a click instruction for the at least one target push topic, the client corresponding to the topic pushing request to display a push page with a pre-established link to the clicked target push topic, where the push page comprises associated push information of the clicked target push topic.

In order to ensure the effect of pushing the target push topic, at least one target push topic to be currently pushed is determined from the plurality of reference push topics according to the client feature information. The at least one target push topic matches the client feature information, and therefore the effect of pushing the target push topic is ensured.

In one embodiment of the present disclosure, at least one ranking factor corresponding to each reference push topic is obtained, where the ranking factor comprises at least one of: a topic type, a topic exposure, and a topic popularity value, where the topic type may comprise hot topics summarized according to industry real-time hot spots, search term hots pots, etc., and recommended topics according to scenario demands (for example, when a piece of current news suddenly appears, a keyword of the current news is taken as a recommended topic). The topic exposure is an initial exposure of each candidate push topic in a target push topic set when each push topic in a previous push topic set is pushed to the client corresponding to the topic pushing request for the first time, and may be the topic popularity value of each push topic in the target push topic set when it is pushed to the client corresponding to the topic pushing request for the first time. It may be appreciated that an associated push information set corresponding to each target push topic is obtained in advance, and a push page corresponding to each target push topic is generated according to the associated push information set. The associated push information set comprises multiple associated push information, and the associated push information belongs to any type of push information under the corresponding target push topic. The associated push information includes but is not limited to information of an information type such as a short video, information of a live stream type such as a live stream video, information of an article type such as goods-pushing information, information of an activity type such as a promotional activity, self-defined promotional information, etc.

In one embodiment of the present disclosure, a push page corresponding to each target push topic is generated according to the associated push information set, where the push page comprises the associated push information of the corresponding target push topic. A link between each target push topic and a corresponding push page is established, and at least one target push topic is sent to the client corresponding to the topic pushing request. Thus, when a click instruction for the at least one target push topic is detected, the client corresponding to the topic pushing request is controlled to display a push page of the clicked target push topic. On the one hand, the matching degree between the at least one pushed topic and the client feature information ensures the pushing effect of the pushed target push topic. On the other hand, the link is established between the target push topic and the push page containing associated push information under the corresponding topic, thereby ensuring that relevant associated push information is obtained by triggering the corresponding target push topic, and improving the interaction experience.

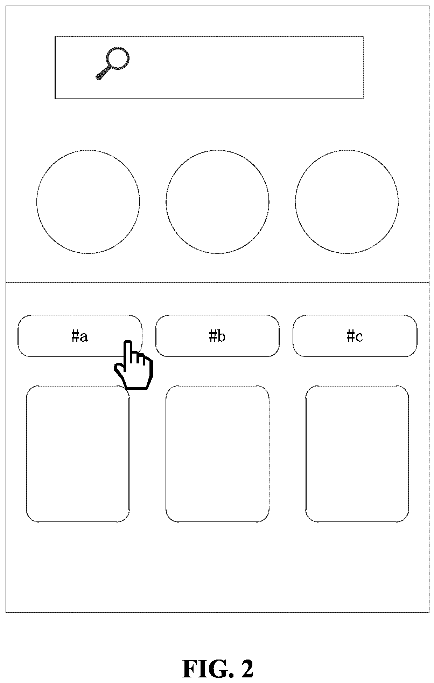

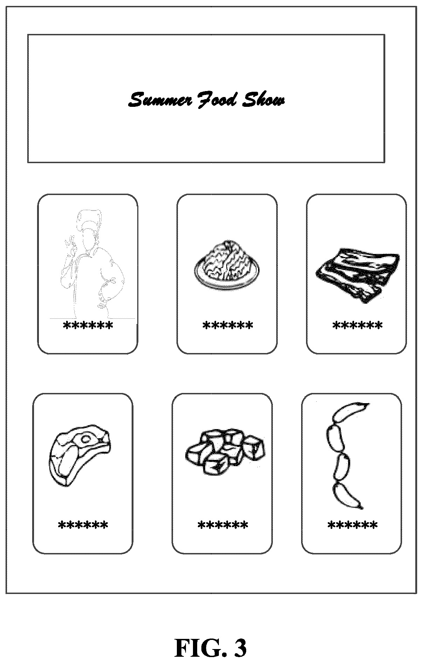

For example, as shown in FIG. 2, when the client feature information corresponding to the client is "a topic of interest in a food industry type", the target push topics in the food industry type determined from the current push topic pool are *a,* b and c. If *a* is clicked, a push page A corresponding to *a* is displayed as shown in FIG. 3, where the push page A contains a food pushing video related to *a.*

To sum up, the topic pushing processing solution according to embodiments of the present disclosure comprises: in response to obtaining a topic pushing request sent by a client, obtaining client feature information corresponding to the client, and determining, from a current push topic pool, a plurality of reference push topics matching the client feature information; obtaining a ranking score corresponding to each reference push topic based on at least one ranking factor corresponding to each reference push topic; determining at least one target push topic currently to be pushed, from the plurality of reference push topics based on the ranking score, and sending the at least one target push topic to the client corresponding to the topic pushing request, so that when a click instruction for the at least one target push topic is detected, the client corresponding to the topic pushing request is controlled to display a push page with a pre-established link to the clicked target push topic, where the push page comprises associated push information of the clicked target push topic. In this way, a success rate of pushing topics is enhanced, and the topic pushing request effect is improved in a way that the push topic is linked to the push page which comprises corresponding associated push information.

It should be appreciated that there may be other alternative implementations of determining the at least one target push topic from the plurality of reference push topics in different application scenarios. Examples are presented as follows:

In one embodiment of the present disclosure, a preset number of previous push topics may be determined from the plurality of reference push topics as the at least one target push topic according to the time of topics being added to the current push topic pool.

In one embodiment of the present disclosure, it is readily appreciated that new topics may be added to the current push topic pool at any time. Therefore, in order to determine topic popularity values of the newly-added topics, a random determination manner is employed to determine the target push topic from the new topics.

In one embodiment of the present disclosure, in a case that at least one first candidate push topic satisfying a preset random pushing condition exists among the plurality of reference push topics, at least one target push topic is randomly determined from the at least one first candidate push topic, where the number of topics in the first candidate push topic may be set according to scenario demands. The first candidate push topic satisfying the preset random pushing condition is a new topic whose topic popularity value needs to be determined.

In an actual execution process, the above preset random pushing condition varies with different application scenarios. In some possible embodiments, if the total push times of the reference push topics is smaller than a first preset threshold of push times, for example, the preset threshold of push times may be 10,000, the corresponding reference push topic satisfies the preset random pushing condition. The total push times of the reference push topic is the total times that the reference push topic is pushed after being added to the current push topic pool.

In the present embodiment, at least one second candidate push topic which does not satisfy the preset random pushing condition exists among the plurality of reference push topics. At least one target push topic is determined based on the topic popularity value of the at least one second candidate push topic. For example, the at least one second candidate push topic is ranked in a descending order of the topic popularity values, and a top preset number of second push topics are selected from a ranking result as the target push topics. The number of second candidate push topics may be set according to scenario demands.

In the present embodiment, if the plurality of reference push topics comprise both the first candidate push topics and the second candidate push topics, the number of the first candidate push topics and the second candidate push topics may be calibrated according to scenario demands. For example, if five target push topics are sent each time to the client corresponding to the topic request, two first candidate push topics and three second candidate push topics may be determined as the target push topics.

In one embodiment of the present disclosure, after at least one target push topic is determined from the target push topic set, the topic exposure of the target push topic is updated. In some possible embodiments, a difference between a first preset threshold of push times and a current total push times of each target push topic pushed to the client corresponding to the topic pushing request may be calculated, where the first preset threshold of push times may be calibrated according to the scenario, and is usually a maximum number of times that the target topic may be pushed to the client, for example, the first preset threshold of push times may be 10. The current total push times of each target push topic is the current total times pushed to the client corresponding to the topic pushing request. A reference ratio of the difference to the first preset threshold of push times is calculated.

After the reference ratio is obtained, a product of the reference ratio and the topic exposure is calculated, and the topic exposure of each target push topic is updated based on the product corresponding to each target push topic. In this way, the greater the current total push times is, the smaller the obtained difference is, and thus the smaller the obtained reference ratio is, the smaller the corresponding updated topic exposure is.

For example, if a historical exposure of target push topic 1 before the current push to client Q this time is 0.5, the first preset threshold of push times is 10, and the current total push times after the current push is added is 2 (namely, the current push is the second push to client Q), it is determined that the updated historical exposure is 0.5(10-2)/10 = 0.4, and thus the historical exposure of target push topic 1 falls from 0.5 to 0.4 after the current push.

If a topic is pushed to the client corresponding to the topic pushing request more times, the topic might be an old topic for the client. Therefore, the corresponding topic exposure is lower, and thus the probability that the topic is pushed to the client multiple times is reduced when the target push topic is determined in combination with the topic exposure.

Certainly, in some possible embodiments, it is very probable that although some target push topics are pushed to the client corresponding to the same topic pushing request more times, the client has previously clicked on the target push topic. Therefore, To avoid determining a target push topic that the client is interested in as an old topic solely based on the push times, which could result in a lower exposure for the topic and reduce the probability of pushing it to the corresponding client, the topic pushing processing method in the present embodiments further comprises: in response to a click instruction for at least one target push topic by the client corresponding to the topic pushing request, clearing the current total push times of the clicked target push topic, and re-counting, i.e., when the target push topic, after being clicked, is pushed to the same client next time, the current total push times of the target push topic is 1, and counting is restarted.

The ranking factor included in the determined at least one ranking factor may be selected according to scenario demands, for example, only the topic popularity value may be taken as the ranking factor, or for another example, only the topic exposure may be taken as the ranking factor.

After at least one ranking factor of each reference push topic is determined, a normalized value corresponding to each ranking factor is determined, where the manner of the normalized value corresponding to each ranking factor may be determined according to scenario demands. The manners are not listed one by one here.

During the actual implementation process, when the ranking factor comprises a topic type, in order to ensure that the recommended topic may be pushed to the corresponding client, the normalized value corresponding to the recommended topic is higher. As another example, when the ranking factor comprises a topic type, in order to ensure that a new topic may be pushed to the corresponding client, the current number of times the new topic has already been pushed may be determined, and a corresponding normalized value may be determined according to the number of times the new topic has already been pushed, where the normalized value may be in an inverse relationship with the number of times the new topic has already been pushed, to ensure that the new topic with a smaller number of times pushed may match a higher normalized value, and accordingly, increase the probability that the new topic that has been pushed fewer times is pushed to the client corresponding to the topic pushing request.

In the present embodiment, all the normalized values corresponding to each reference push topic are summed to obtain a ranking score of each reference push topic; furthermore, a plurality of reference push topics are ranked in a descending order of the ranking scores to obtain a reference push topic list; and a preset number of top reference push topics are determined from the reference push topic list as the at least one target push topic.

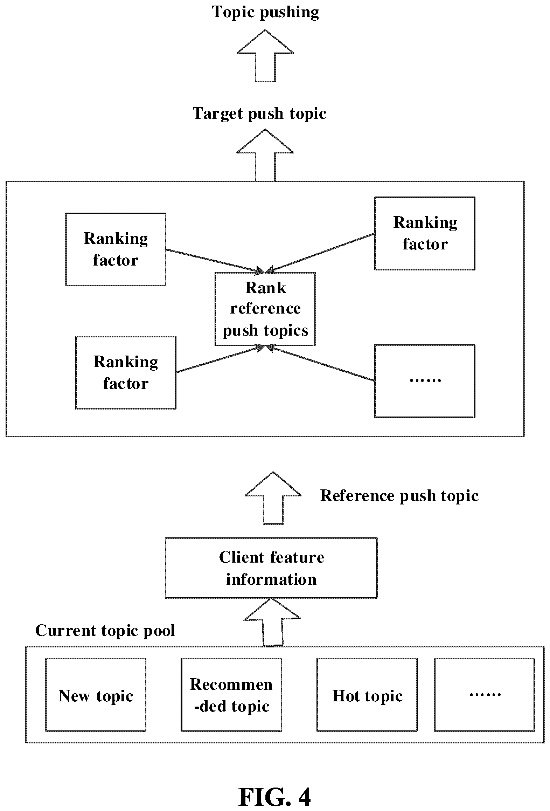

That is to say, in the embodiments of the present disclosure, if at least one ranking factor comprises a topic type, topic exposure and a topic popularity value, with reference to FIG. 4, the current push topic pool comprises hot topics summarized according to industry real-time hot spots, search term hot spots, etc. (a hot topic satisfying a preset random pushing condition is taken a new topic), and recommended topics set according to scenario demands (for example, when a piece of current news suddenly appears, a keyword of the current news is taken as the recommended topic; for example, the recommended topic may be a recommended topic obtained according to the key word of a certain promotional activity). After a plurality of reference push topics matching the client feature information are determined from the current push topic pool, the topic type, the topic exposure, the topic popularity value, etc. of each reference push topic are obtained (if there is no corresponding ranking factor, the normalized value of the corresponding ranking factor is directly determined as 0; for example, since reference push topic E is a new topic just added, the normalized value corresponding to the topic popularity value of E is 0). After the normalization processing is performed for at least one ranking factor corresponding to each reference push topic, the normalized value corresponding to each reference push topic is obtained. The normalized values corresponding to all reference push topics is summed to obtain a ranking score of each reference push topic, and then a reference push topic list of the finally-ranked reference push topics is obtained. A preset number of top reference push topics are determined from the reference push topic list as the at least one target push topic. The preset number is related to a maximum number of the target push topics displayed each time on the client corresponding to the topic request.

In one word, according to the topic pushing processing method according to the embodiments of the present application, after the plurality of reference push topics matching the client feature information are determined, the plurality of reference push topics are re-ordered and ranked in combination with ranking factors such as topic popularity, a topic exposure, etc., the target push topic is selected based on the ranking result, and the flexibility in determining the target push topics is improved.

How to obtain a set of associated push information corresponding to each target push topic is described below with reference to embodiments.

In one embodiment of the present disclosure, it may be appreciated that a plurality of reference push information satisfying a preset pushing condition are determined, where the reference push information includes, but is not limited to, information of an information type such as a short video, information of a live stream type such as a live stream video, information of an article type such as goods-pushing information, information of an activity type such as a promotional activity, self-defined promotional information, etc.

In some possible embodiments, the preset pushing condition is that an amount of the play of the reference push information exceeds a preset amount; in some possible embodiments, the preset pushing condition is that a push popularity value of the reference push information is greater than a preset push popularity threshold, where the push popularity value is obtained by summing according to at least one push popularity factor value of the reference push information, for example, obtaining a pushing factor corresponding to each reference push information, and performing normalization processing on the pushing factor to obtain a corresponding pushing factor value, where the push popularity factor of each reference push information is different from the information type thereof. For example, if the reference push information is information of an information type such as a short video, the push popularity factor comprises the amount of play of the reference push information; if the reference push information is the information of an article type such as goods-pushing information, the push popularity factor comprises an amount of goods purchased, etc.

Furthermore, after a plurality of reference push information satisfying the preset pushing condition are determined, an information label pre-determined for each reference push information is obtained, where the information label is an information label set when the reference push information is pushed. For example, if the reference push information is goods detailed information of "rose", the corresponding information label comprises "Valentine's Day", "love between couples", "gifts of romantic valentine's day", etc.

The information label of each reference push information is matched with a target push topic, where a matching manner may be semantic matching or keyword matching, etc. A plurality of reference push information successfully matched with the target push topic are determined, and a correspondence between the target push topic and the matched plurality of reference push information is generated and stored, i.e., after the target push topic and the matched plurality of reference push information are aggregated, the matched plurality of reference push information are bounded with the target push topic.

Accordingly, a pre-generated correspondence is queried, a plurality of reference push information corresponding to the target push topic are obtained as a plurality of associated push information, and a set of associated push information is generated according to the plurality of associated push information.

Furthermore, after the set of associated push information corresponding to the target push topic is obtained, a push page corresponding to each target push topic is generated according to the set of associated push information, and the push page serves as a landing page after each target push topic is clicked.

In the present embodiment, at least one information type corresponding to the set of associated push information is determined, and a display number threshold of each information type on the push page is determined, where the display number threshold may be determined according to the display number threshold of each information type defined in an automatically matched push page template, and the display number threshold may also be customized.

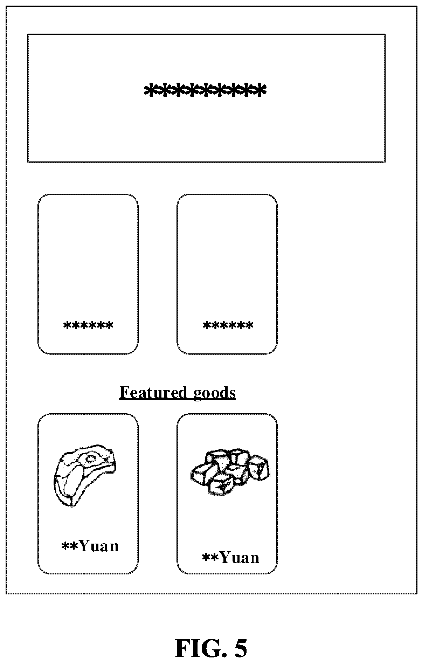

A style of the push page template may be pre-defined. For example, when the information type comprises a content information type and a goods information type, if the corresponding associated push information under the goods information type comprises a plurality of goods labels (the goods labels are obtained by matching according to a goods warehouse when the goods are put online, where the goods warehouse comprises a correspondence between each goods type and the corresponding goods label), and accordingly, if the associated push information to be displayed under the goods information type does not have a corresponding goods label, the style of the push page template is as shown in FIG. 5: the associated push information under the two content information types is displayed in an upper half of the page template, and the associated push information under the two goods information types is displayed in a lower half of the page template.

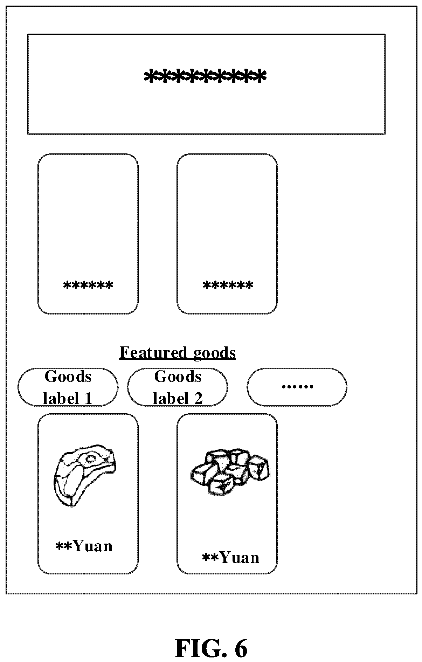

If the associated push information to be displayed under the goods information type contains a plurality of corresponding goods labels, the style of the push page template is as shown in FIG. 6. The associated push information under two content information types is displayed in the upper half of the page template, and a plurality of corresponding goods labels are displayed in the lower half of the page template, so as to display relevant associated push information under the corresponding goods labels after the corresponding goods labels are triggered.

After a threshold of a number of information in each information type displayed on the push page is determined, the associated push information corresponding to each information type is ranked in a descending order of the push popularity values of the associated push information corresponding to each information type to generate an associated push information list. According to the display number threshold corresponding to each information type, top associated push information of the display number threshold is determined from the associated push information list corresponding to each information type as initial associated push information. A push page is generated according to the initial associated push information corresponding to all the information types, for example, and the push page is generated by filling corresponding initial associated push information according to the selected push page template.

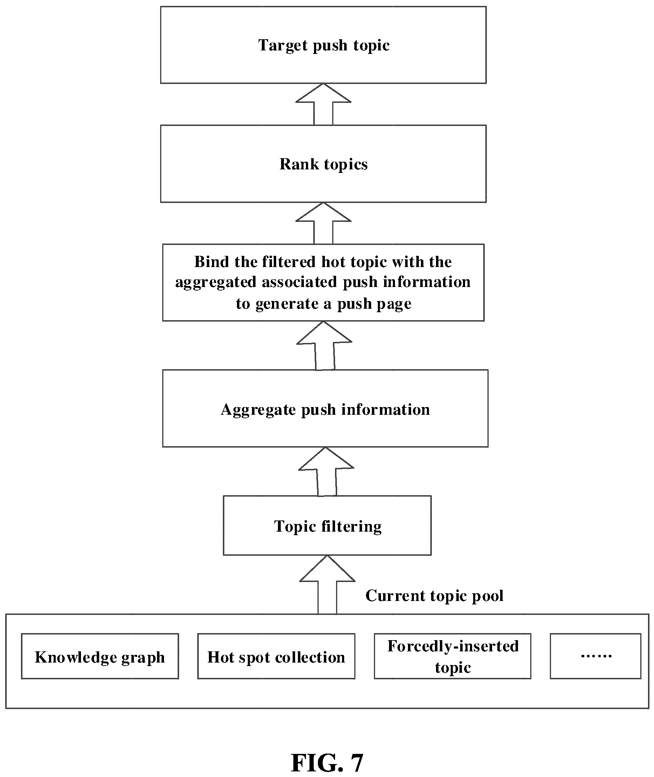

Thus, in one embodiment of the present disclosure, as shown in FIG. 7, in the topic pushing processing method of the present disclosure, firstly, hot topics, recommended topics, etc. are automatically generated according to knowledge graphs and hot spot collection, etc. Then filtered hot topics are obtained by filtering the hot topics in a manner such as online check. In the topic filtering stage, repeated topics may be aggregated, topics containing preset characters may be removed, topics not exceeding a preset number of associated push information may be removed, etc. The specific filtering manner may be set according to scene demands.

Furthermore, the push information is aggregated according to information labels of the push information, the filtered hot topics are bound with the aggregated associated push information to generate the push page, and the target push topic bound with the push page is placed as a topic in the current push topic pool, where the topics may be ranked in combination with various ranking factors upon placement. For example, the target topic is pushed to the client corresponding to the topic pushing request in response to receiving the topic pushing request. After a click instruction for the target push topic is detected, the push page of the clicked target push topic is displayed.

In embodiments of the present disclosure, in order to further ensure an interaction effect, an automatic check is also performed on the push page related to the push topic, and some skipped invalid push topics and push topics containing repeated associated push information are reported to the relevant client to help the relevant client to process the push page.

In summary, according the topic pushing processing method of the embodiments of the present disclosure, the associated push information associated with each target push topic is aggregated, the push page of the target push topic is generated according to the associated push information, and a link with the push page corresponding to each target push topic is built, so that when the target push topic is clicked, some associated push information with high push popularity under the corresponding push topic is displayed, thereby improving the interaction experience.

In order to further ensure the pushing effect of the pushed relevant target topic, topic filtering may also be performed before pushing a corresponding target push topic to the corresponding client, so that clients having the same client feature information obtain different target push topics even though they send the topic pushing request simultaneously, thereby further ensuring the topic pushing effect.

In one embodiment of the present disclosure, whether at least one target push topic satisfies a preset filtering condition is determined. In a case that the preset filtering condition is satisfied, an alternative target push topic corresponding to the target push topic is obtained, where the alternative target push topic may be determined from other reference push topics except the at least one target push topic in the reference push topic list. For example, the alternative target push topic is determined from the other reference push topics in a descending order of the popularity information. The alternative target push topic is ranked in the reference push topic list before remaining reference push topics other than the alternative target push target among the other reference push topics.

In some possible embodiments, if the corresponding alternative target push topic cannot be obtained from the reference push topic list, a fallback policy is used to obtain the corresponding alternative target push topic, to ensure that the number of the finally-displayed target push topics is not small.

For example, judgement is made as to whether the number of topics of the remaining reference push topics satisfying the preset filtering condition in the reference push topic list is less than a preset number lower limit. In a case that the number of topics is not smaller than the preset number lower limit, at least a part of the reference push target topics not satisfying the preset filtering condition may be directly removed, and the remaining reference push topics may be pushed. If the number of topics is smaller than the preset number lower limit, the alternative target topic may be determined from a reference topic library. The reference topic library may comprise a current push topic pool, and the current push topic pool comprises search topics determined based on hot spot search terms, etc. When the alternative target push topic is determined from the current push topic pool, a topic may be randomly selected as the alternative target push topic to ensure that at least one target push topic after the replacement satisfies the preset filtering condition. The reference topic library may further comprise a plurality of preset alternative topics. In other alternative embodiments, other manners may also be used to determine the alternative target topic.

The above preset filtering condition varies with application scenarios. In some possible embodiments, in order to avoid pushing the same target push topic to the same client multiple times, the preset filtering condition may correspond to the filtering of the control of the topic pushing frequency. If the current total times of pushing the target push topic to the client corresponding to the topic pushing request is larger than or equal to a second preset threshold of push times, it is believed that the target push topic satisfies the preset pushing condition. The second preset threshold of push times may be calibrated as needed, for example, the threshold may be 10 times.

Certainly, in some possible embodiments, it is very probable that although some target push topics are pushed to the client corresponding to the same topic request more times, the target push topic is once clicked on the client, which indicates that the client might be interested in the target push topic. Therefore, in order to avoid filtering out the target push topic interesting to the client according to the number of push times, in the present embodiment, the topic pushing processing method further comprises: in response to a click instruction for at least one target push topic by the client corresponding to the topic pushing request, clearing the current total push times of the clicked target push topic, and re-counting, i.e., when the target push topic, after being clicked, is pushed to the same client next time, the current total push times of the target push topic is 1, and the number of times the target push topic is pushed to the client corresponding to the topic pushing request is recounted to avoid filtering out the target push topic interesting to the client.

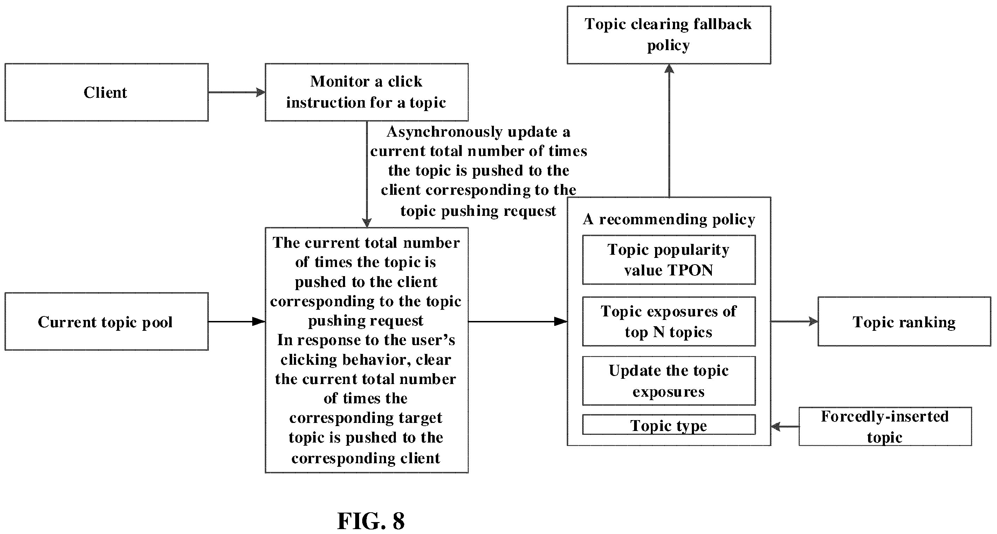

When the target push topic is determined based on at least one ranking factor as described above, determination in other manners may also be selected flexibly according scenario demand. For example, in one embodiment of the present disclosure, as shown in FIG. 8, if the ranking factor is a topic exposure score, a topic type (a recommended topic in the present embodiment) and a topic popularity value, after the target push topic is pushed to the client corresponding to a topic pushing request, an ID of the client to which the target push topic is pushed and a pushing time are recorded in the form of a message queue, and the current total times the target push topic is pushed to the client corresponding to the topic pushing request is asynchronously updated, where in response to an instruction of the client corresponding to the topic pushing request clicking at least one target push topic, the current total times pushing the target push topic clicked by the client corresponding to the topic pushing request is determined.

In the present embodiment, a plurality of reference push topics matching the client feature information are determined from the current push topic pool, where each reference push topic has a topic popularity value; the plurality of reference push topics are ranked in a descending order of the topic popularity values, and N top reference push topics are selected from a ranking result, where N may be calibrated according to scenario demands. Then, topic exposure scores of the N top reference push topics are obtained, and a final topic ranking result is obtained by ranking the N top reference push topics in a descending order of the topic exposure scores. If a recommended topic is obtained at this time, the recommended topic is inserted as the first topic in the topic ranking result, and then topic pushing processing is realized according to the final ranking result, for example, a preset number of top reference push topics are selected as the target push topics.

In one embodiment of the present disclosure, the push topics in the current push topic pool may also be subject to a recovery offline process in order to ensure that the target push topics comply with a trending hot spot of the current pushing scenario.

In the present embodiment, determination is performed as to whether there is a third push topic that satisfies a preset recovery condition in the current push topic pool. In a case that there is the third push topic, the third push topic is removed from the current push topic pool.

The preset recycling condition varies with different application scenarios. Examples are illustrated as follows:
In some possible embodiments, the preset recovery condition comprises a condition that the current time does not belong to a preset pushing time corresponding to the third push topic, namely, the third push topic has a preset pushing time. For example, if the third push topic is a push topic corresponding to a promotional activity, the pushing time corresponding to the third push topic is a validity time corresponding to the promotional activity; for another example, if the third push topic is a topic related to summer, the third push topic is a time corresponding to summer; for another example, if the third push topic is a topic related to Mid-Autumn Festival, the third push topic is a time corresponding to Mid-Autumn Festival, etc. Only when the third push topic is pushed at the preset push time can the push demand be satisfied. Therefore, in the present embodiment, after the current time does not belong to the preset push time corresponding to the third push topic, the third push topic is believed as satisfying the preset recovery condition.

In some possible embodiments, when the topic popularity value of the third push topic is less than a preset popularity threshold, it is believed that the third push topic is already "outdated" and does not comply with the current hot trend, and therefore it is believed that the third push topic satisfies the preset recovery condition.

For example, the topic popularity value of the third push topic corresponds to an exposure click rate. If the exposure click rate is smaller than 0.18, it is believed that the third push topic is already "outdated" and that the third push topic satisfies the preset recovery condition.

In some possible embodiments, if a push object is included in an associated push information set corresponding to the third push topic, the push object may be goods; if an effective push number of the goods (such as a purchase amount of the goods) is less than a preset amount threshold, the third push topic is believed as satisfying the preset recovery condition.

In order to facilitate refined recovery management of the target push topic, recovery conditions of different levels may also be set, and different recovery processing is performed for the recovery conditions of different levels. For example, if the level of the recovery condition satisfied is a third preset level, the third push topic is directly made offline and removed. For another example, if the level of the recovery condition satisfied is a second preset level, the third push topic is sent to a person in charge for review. As for an embodiment in which whether the third push topic satisfies a preset recovery condition is determined according to the above topic popularity value, different preset popularity thresholds may be set, and the different preset popularity thresholds correspond to the recovery conditions of different levels. As for an embodiment in which whether the third push topic satisfies the preset recovery condition is determined according to an effective number of the push objects pushed, different preset number thresholds may be set, where the different preset number thresholds correspond to recovery conditions of different levels.

To sum up, according to the topic pushing processing method of the embodiments of the present disclosure, filtration processing may be performed on a relevant target push topic with reference to a clicking operation on the relevant target topic at the client, thereby further realizing the topic pushing effect; furthermore, recovery processing is performed on some push topics so as to ensure the quality of the pushed target topic.

In order to implement the above embodiments, the present disclosure further provides a topic pushing processing apparatus.

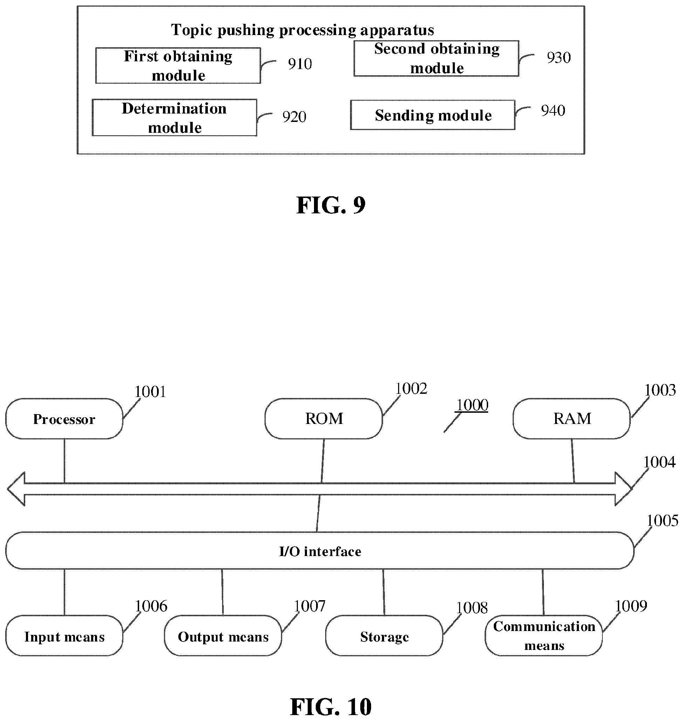

FIG. 9 illustrates a structural schematic diagram of a topic pushing processing apparatus according to embodiments of the present disclosure. The method may be implemented by software and/or hardware, and may generally be integrated in an electronic device for topic pushing processing. As shown in FIG. 9, the apparatus comprises: a first obtaining module 910, a determination module 920, a second obtaining module 930 and a sending module 940, where
The first obtaining module 910 is configured to, in response to obtaining a topic pushing request sent by a client, obtain client feature information corresponding to the client;
the determination module 920 is configured to determine, from a current push topic pool, a plurality of reference push topics matching the client feature information;
the second obtaining module 930 is configured to obtain a ranking score corresponding to each reference push topic based on at least one ranking factor corresponding to each reference push topic;
the sending module 940 is configured to determine at least one target push topic currently to be pushed, from the plurality of reference push topics based on the ranking score, and send the at least one target push topic to the client corresponding to the topic pushing request, to control, in response to detecting a click instruction for the at least one target push topic, the client corresponding to the topic pushing request to display a push page with a pre-established link to the clicked target push topic, where the push page comprises associated push information of the clicked target push topic.

The topic pushing processing apparatus according to embodiments of the present disclosure may execute the topic pushing processing method according to any embodiment of the present disclosure, and has corresponding functional modules for executing the method and resultant advantageous effects, which will not be described in detail herein.

To implement the above embodiments, the present disclosure further provides a computer program product comprising a computer program/instructions that, when executed by a processor, implements the topic pushing processing method in the above-described embodiments.

FIG. 10 is a structural schematic diagram of an electronic device according to embodiments of the present disclosure
Reference is made below to FIG. 10 which shows a structural schematic diagram of an electronic device 1000 adapted to implement the embodiments of the present disclosure. The electronic device 1000 in embodiments of the present disclosure may include, but not limited to, mobile terminals such as mobile phones, notebook computers, digital broadcast receivers, Personal Digital Assistants (PDAs), PADs (tablet computers), Portable Multimedia Players (PMPs), in-vehicle terminals (e.g., in-vehicle navigation terminals), etc. and fixed terminals such as digital TVs, desktop computers, etc. The electronic device shown in FIG. 10 is merely an example and should not impose any limitations on the functionality and scope of use of embodiments of the present disclosure.

As shown in FIG. 10, the electronic device 500 may comprise a processor (e.g., a central processor, a graphics processor, etc.) 1001 that may perform various suitable acts and processes in accordance with a program stored in a Read Only Memory (ROM) 1002 or a program loaded from a storage 1008 into a Random Access Memory (RAM) 103. In the RAM 1003, various programs and data needed by the operation of the electronic device 1000 are also stored. The processor 1001, the ROM 1002, and the RAM 1003 are connected to one another via a bus 1004. An input/output (I/O) interface 1005 is also coupled to bus 1004.

In general, the following devices may be connected to the I/O interface 1005: an input means 1006 including, for example, a touch screen, a touch pad, a keyboard, a mouse, a camera, a microphone, an accelerometer, a gyroscope, etc.; an output means 1007 including, for example, a Liquid Crystal Display (LCD), a speaker, a vibrator, etc.; a storage 1008 including, for example, a magnetic tape, a hard disk, etc.; and a communication means 1009. The communication means 1009 may allow the electronic device 1000 to communicate in a wireless or wired manner with other devices to exchange data. While FIG. 10 illustrates the electronic device 1000 having various devices, it is to be understood that not all illustrated devices are required to be implemented or provided. More or fewer devices may alternatively be implemented or provided.

Especially, according to embodiments of the present disclosure, the processes described above with reference to flow charts may be implemented as computer software programs. For example, embodiments of the present disclosure comprise a computer program product comprising a computer program carried on a non-transitory computer-readable medium, the computer program comprising program code for performing the method illustrated by the flow charts. In such embodiments, the computer program may be downloaded and installed from a network via the communication means 1009, or installed from the storage 1008, or installed from the ROM 1002. When the computer program is executed by the processor 1001, the above-described functions defined in the topic pushing processing method according to the embodiments of the present disclosure are performed.

It is appreciated that the computer-readable medium described above in the present disclosure may be either a computer-readable signal medium or a computer-readable storage medium, or any combination of the two. The computer-readable storage medium may be, for example but not limited to, an electronic, magnetic, optical, electromagnetic, infrared, or semiconductor system, apparatus, or device, or a combination of any of the above. More specific examples of the computer-readable storage medium may comprise, but are not limited to: an electrical connection having one or more conduction wires, a portable computer magnetic disk, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the above. In the present disclosure, the computer-readable storage medium may be any tangible medium that comprises or stores a program that may be used by or in conjunction with an instruction execution system, apparatus, or device. In the present disclosure, the computer-readable signal medium may comprise an information signal embodied in baseband or propagated as part of a carrier carrying computer-readable program code. Such propagated information signals may take many forms, including but not limited to, electromagnetic signals, optical signals, or any suitable combinations thereof. The computer-readable signal medium may also be any computer-readable medium other than a computer-readable storage medium that may send, propagate, or transport the program for use by or for use in conjunction with the instruction execution system, apparatus, or device. The program code contained on the computer-readable medium may be transmitted with any suitable medium including, but not limited to: electrical wire, optic cable, RF (radio frequency), and the like, or any suitable combinations thereof.

In some embodiments, the client and server may communicate using any currently known or future-developed network protocol, such as HTTP (HyperText Transfer Protocol), and may be interconnected with any form or medium of digital data communication (e.g., a communication network). Examples of the communication network comprise Local Area Networks ("LANs"), Wide Area Networks ("WANs"), the Interne, and peer-to-peer networks (e.g., ad hoc peer-to-peer networks), as well as any currently known or future-developed networks.

The computer readable medium may be contained in the above-described electronic device; it may also be present separately and not installed into the electronic device.

The above computer readable medium carries one or more programs which, when executed by the electronic device, enable the electronic device to: in response to obtaining a topic pushing request sent by a client, obtain client feature information corresponding to the client, and determine, from a current push topic pool, a plurality of reference push topics matching the client feature information; according to at least one ranking factor corresponding to each reference push topic, obtain a ranking score corresponding to each reference push topic; determine at least one target push topic currently to be pushed, from the plurality of reference push topics based on the ranking score, and send the at least one target push topic to the client corresponding to the topic pushing request, so that when a click instruction for the at least one target push topic is detected, the client corresponding to the topic pushing request is controlled to display a push page of the clicked target push topic pre-constructed with a link, where the push page comprises associated push information of the clicked target push topic. In this way, a success rate of pushing topics is enhanced, and the topic pushing request effect is improved in a way that the push topic is linked to the push page which comprises corresponding associated push information.

The computer program code for carrying out operations of the present disclosure may be written in one or more programming languages or combinations thereof. The programming languages include, but not limited to, object-oriented programming languages, such as Java, smalltalk, C++, and conventional procedural programming languages, such as the "C" language or similar programming languages. The program code may be executed entirely on the user's computer, executed partly on the user's computer, executed as a stand-alone software package, executed partly on the user's computer and partly on a remote computer, or executed entirely on the remote computer or a server. In the case of the remote computer, the remote computer may be connected to the user's computer through any type of network, including a Local Area Network (LAN) or a Wide Area Network (WAN), or it may be connected to an external computer (e.g., connected through the Internet using an Internet service provider).

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

The units described in connection with the embodiments disclosed herein may be implemented in a software manner or a hardware manner. The names of the units do not constitute limitations of the units themselves in a certain case.

The functions described herein above may be performed, at least in part, by one or more hardware logic constituent elements. For example, without limitation, exemplary types of hardware logic constituent elements that may be used comprise: a Field Programmable Gate Array (FPGA), an Application Specific Integrated Circuits (ASIC), an Application Specific Standard Products (ASSP), a Systems On Chip (SOC), a Complex Programmable Logic Device (CPLD), and so on.

In the context of the present disclosure, the machine-readable medium may be a tangible medium that may contain or store a program for use by or for use in conjunction with an instruction execution system, apparatus, or device. The machine-readable medium may be a machine-readable signal medium or a machine-readable storage medium. The machine-readable medium may comprise, but is not limited to, an electronic, magnetic, optical, electromagnetic, infrared, or semiconductor system, apparatus, or device, or any suitable combinations thereof. More specific examples of the machine-readable storage medium would comprise an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination thereof.

The foregoing description is only illustrative of preferred embodiments of the present disclosure and of the principles of the technology employed. It will be appreciated by those skilled in the art that the scope of the present disclosure is not limited to technical solutions formed by specific combinations of the above technical features, and meanwhile covers other technical solutions formed by any combinations of the above technical features or other equivalent features, for example, technical solutions formed by mutual replacement of the above features and technical features having similar functions disclosed in (not limited to) the present disclosure, without departing from the concept disclosed above.

In addition, while operations are depicted in a particular order, this should not be understood as requiring that such operations are performed in the particular order shown or in sequential order. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in the context of a single implementation may also be implemented in multiple implementations separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

## Claims

1. A topic pushing processing method, comprising:
in response to obtaining a topic pushing request sent by a client, obtaining client feature information corresponding to the client, and determining, from a current push topic pool, a plurality of reference push topics matching the client feature information; and
obtaining a ranking score corresponding to each reference push topic based on at least one ranking factor corresponding to each reference push topic; determining at least one target push topic currently to be pushed, from the plurality of reference push topics based on the ranking score, and sending the at least one target push topic to the client corresponding to the topic pushing request, to control, in response to detecting a click instruction for the at least one target push topic, the client corresponding to the topic pushing request to display a push page with a pre-established link to the clicked target push topic, wherein the push page comprises associated push information of the clicked target push topic.

2. The method of claim 1, wherein obtaining the ranking score corresponding to each reference push topic comprises:
determining a normalized value corresponding to each ranking factor, and summing all normalized values corresponding to each reference push topic to obtain a ranking score of each reference push topic.

3. The method of claim 2, wherein determining the at least one target push topic currently to be pushed, from the plurality of reference push topics based on the ranking score comprises:
ranking the plurality of reference push topics in a descending order of the ranking scores to obtain a reference push topic list; and
determining a preset number of top reference push topics from the reference push topic list as the at least one target push topic.

4. The method of any of claims 1-3, wherein the ranking factor comprises at least one of: a topic type, a topic exposure, and a topic popularity value.

5. The method of claim 4, wherein in response to the ranking factor comprising the topic exposure, the method further comprises:
calculating a difference between a first preset threshold of push times and a current total push times of each target push topic pushed to the client corresponding to the topic pushing request;
calculating a reference ratio of the difference to the first preset threshold of push times; and
calculating a product of the reference ratio and the topic exposure, and updating the topic exposure of each target push topic based on the product corresponding to each target push topic.

6. The method of claim 4, wherein in response to the ranking factor comprising the topic popularity value, the method further comprises:
in response to receiving a topic click instruction for a first push topic in the at least one target push target in the client, determining a first ratio of a current total push times to a current total click times for the first push topic, and updating the topic popularity value of the first push topic based on the first ratio; and
determining a second push topic in the at least on target push topic that has not been clicked, determining a second ratio of a current total push times to a total click times for the second push topic, and updating the topic popularity value of the second push topic based on the second ratio.

7. The method of claim 1, wherein prior to pushing the at least one target push topic to the client corresponding to the topic pushing request, the method further comprises:
obtaining a set of associated push information corresponding to each target push topic;
generating a push page corresponding to each target push topic based on the set of associated push information;
establishing a link between each target push topic and its corresponding push page.

8. The method of claim 7, wherein obtaining the set of associated push information corresponding to each target push topic comprises:
querying a pre-generated correspondence, and obtaining a plurality of reference push information corresponding to the target push topic as the plurality of associated push information; and
generating the set of associated push information based on the plurality of associated push information.

9. The method of claim 8, wherein prior to querying the pre-generated correspondence and obtaining the plurality of reference push information corresponding to the target push topic, the method further comprises:
determining a plurality of reference push information satisfying a preset pushing condition, and obtaining an information label pre-determined for each reference push information;
matching the information label of each reference push information with the target push topic, and determining a plurality of reference push information matching the target push topic; and
generating and storing a correspondence between the target push topic and the matched plurality of reference push information.

10. The method of claim 9, wherein the preset pushing condition comprises:
a push popularity value of a reference push information is greater than a preset push popularity threshold, wherein the push popularity value is obtained by summing at least one push popularity factor value of the reference push information.

11. The method of claim 7, wherein generating the push page corresponding to each target push topic based on the set of associated push information comprises:
determining at least one information type corresponding to the set of associated push information, and determining a display number threshold of each information type on the push page;
ranking the associated push information corresponding to each information type in a descending order of the push popularity values of the associated push information corresponding to each information type, to generate an associated push information list;
determining top associated push information with a number of the display number threshold from the associated push information list corresponding to each information type as initial associated push information based on the display number threshold corresponding to each information type; and
generating the push page based on initial associated push information corresponding to all information types.

12. The method of claim **1,** wherein prior to sending the at least one target push topic to the client corresponding to the topic pushing request, the method further comprises:
determining whether the at least one target push topic satisfies a preset filtering condition;
in response to the preset filtering condition is satisfied, obtaining an alternative target push topic corresponding to the target push topic; and
replacing the target push topic with the alternative target push topic corresponding to the target push topic, to obtain at least one updated target push topic, wherein the at least one updated target push topic satisfies the preset filtering condition.

13. The method of claim 12, wherein the preset filtering condition comprises:
the current total push times of the target push topic being pushed to the client corresponding to the push pushing request being larger than or equal to a second preset threshold of push times.

14. The method of any of claims 1-13, further comprising:
in response to a click instruction for the at least one target push topic by the client corresponding to the topic pushing request, clearing the current total push times of the target push topic clicked by the client corresponding to the topic pushing request.

15. The method of any of claims 1-13, further comprising:
determining whether a third push topic that satisfies a preset recovery condition exists in the current push topic pool; and
in response to the third push topic existing, removing the third push topic from the current push topic pool.

16. The method of claim 15, wherein the preset recovery condition comprises:
current time not belonging to preset push time corresponding to the third push topic;
a topic popularity value of the third push topic being smaller than a preset popularity threshold; and/or
an effective push amount of a push object corresponding to the set of associated push information corresponding to the third push topic being smaller than a preset amount threshold.

17. A topic pushing processing apparatus, comprising:
a first obtaining module configured to, in response to obtaining a topic pushing request sent by a client, obtain client feature information corresponding to the client;
a determination module configured to determine, from a current push topic pool, a plurality of reference push topics matching the client feature information;
a second obtaining module configured to obtain a ranking score corresponding to each reference push topic based on at least one ranking factor corresponding to each reference push topic; and
a sending module configured to determine at least one target push topic currently to be pushed, from the plurality of reference push topics based on the ranking score, and send the at least one target push topic to the client corresponding to the topic pushing request, to control, in response to detecting a click instruction for the at least one target push topic, the client corresponding to the topic pushing request to display a push page with a pre-established link to the clicked target push topic, wherein the push page comprises associated push information of the clicked target push topic.

18. An electronic device, comprising:
a processor; and
a memory configured to store instructions executable by the processor,
wherein the processor is configured to read the executable instructions from the memory and execute the instructions to implement the topic pushing processing method of any of claims 1-16.

19. A computer-readable storage medium, the computer readable storage medium having a computer program stored thereon, the computer program being configured to perform the topic pushing processing method of any of claims 1-16.
